# FASCICULE DE BREVET EUROPEEN

(11) **EP 1 228 514 B1**
(45) Date de publication et mention de la délivrance du brevet: **07.09.2005**
(21) Numéro de dépôt: 00968020.8
(22) Date de dépôt: 12.10.2000
(51) Int. Cl.: G21F 9/30, C04B 35/58, C04B 35/563, C04B 35/01

(54) **MATRICE DE CONFINEMENT A BASE DE BORE POUR LE STOCKAGE OU LA TRANSMUTATION D'ELEMENTS RADIOACTIFS A VIE LONGUE**
BEGRENZUNGSMATRIX AUF DER BASIS VON BOR ZUR LAGERUNG ODER TRANSMUTATION VON LANGLEBIGENRADIOAKTIVEN ELEMENTEN
BORON-BASED CONTAINMENT MATRIX FOR THE STORAGE OR TRANSMUTATION OF LONG-LIFE RADIOACTIVE ELEMENTS

(30) Priorité: 13.10.1999 FR 9912766
(43) Date de publication de la demande: 07.08.2002
(73) Titulaire: COMMISSARIAT A L'ENERGIE ATOMIQUE, 75752 Paris 15ème (FR)
(72) Inventeur: DEUTSCH, Sylvain, F-60270 Gouvieux (FR); BRY, Philippe, F-91120 Palaiseau (FR); GOSSET, Dominique, F-92340 Bourg la Reine (FR); SIMEONE, David, F-92160 Antony (FR)
(74) Mandataire: Audier, Philippe André
(86) Numéro de dépôt international: PCT/FR2000/002841
(87) Numéro de publication internationale: WO 2001/027934

(56) Documents cités:
- EP-A- 0 058 618
- FR-A- 2 503 695

## Description

### Domaine technique

La présente invention concerne une matrice de confinement pour le stockage de déchets radioactifs, constitué par des éléments radioactifs à vie longue tels que les produits de fission à vie longue et les actinides. Elle concerne également l'incinération de tels éléments, en particulier les actinides.

Dans les installations de retraitement de combustibles nucléaires usés, il reste en fin de traitement quelques éléments actinides à vie longue et des produits de fission à vie longue qui doivent être conditionnés en vue d'un stockage à long terme dans des matrices très résistantes.

Les matériaux utilisables comme matrice doivent présenter des caractéristiques de stabilité chimique, de stabilité aux rayonnements et de stabilité à la température très élevées pour isoler les éléments radioactifs de l'environnement et les maintenir dans cet état isolé pendant des durées très longues en raison de leur période radioactive.

Dans le cas des actinides, on peut aussi assurer le traitement de ces déchets radioactifs par transmutation dans des réacteurs nucléaires, cette opération étant dénommée ici « incinération ». Il convient donc de les inclure dans des matrices susceptibles d'être soumises à l'irradiation.

### Etat de la technique antérieure

Actuellement, la matrice retenue pour le stockage à long terme de déchets radioactifs à vie longue est le verre, mais on recherche toujours de nouveaux matériaux présentant des caractéristiques encore meilleures pour ce conditionnement.

A la suite de recherches récentes, on a proposé de conditionner ces déchets dans des matrices apatitiques, comme il est décrit dans WO95/02886 [1]. Des recherches ont été poursuivies pour trouver d'autres matériaux susceptibles d'être utilisés comme matrice de confinement ou d'incinération des éléments radioactifs à vie longue tels que les produits de fission à vie longue comme Cs, Sr, Tc, ..., etc, et les actinides.

Parmi les matériaux envisageables, les matériaux à base de bore pourraient être intéressants car le bore est un élément absorbant ou modérateur de neutrons. Jusqu'à présent on a utilisé un seul borure tel que le carbure de bore comme absorbant dans les barres de commande de réacteurs nucléaires à neutrons rapides et de réacteurs à eau pressurisée, et comme modérateur pour des cibles d'incinération. On a ainsi pu constater que ce matériau présente une grande stabilité sous irradiation en raison de sa structure cristalline particulière. En revanche, il est sujet à une corrosion accélérée en milieu aqueux, ce qui le rend impropre à une utilisation comme matrice de confinement dans le cas d'un stockage de longue durée dans des formations géologiques en raison de la présence possible d'eau.

### Exposé de l'invention

La présente invention a précisément pour objet l'utilisation de B₄C et d'autres composés de bore comme matrice de confinement pour le stockage de longue durée ou l'incinération d'éléments radioactifs à vie longue.

Selon l'invention, la matrice de confinement pour le stockage ou l'incinération d'au moins un élément radioactif à vie longue, comprend au moins un composé de bore cristallin de structure rhomboédrique incluant le(s) élément(s) radioactif(s) à vie longue.

Ainsi, le composé de bore utilisé présente une structure cristalline analogue à celle du carbure de bore. Celle-ci est caractérisée par une maille rhomboédrique qui se compose, d'une part, d'une armature constituée d'un réseau rigide de polyèdres de 12 atomes, appelés icosaèdres, qui confère une grande part des propriétés de ces composés et, d'autre part, d'un groupement de 2 ou 3 atomes situés dans les espaces vides, c'est-à-dire au centre du rhomboèdre. Cette structure est particulièrement intéressante car les atomes situés dans les espaces vides peuvent être échangés pour y insérer des atomes d'éléments radioactifs tout en conservant les propriétés de stabilité sous rayonnement du carbure de bore B₄C.

Selon un premier mode de réalisation de la matrice de confinement de l'invention, le(s) élément(s) radioactif(s) à vie longue sont insérés dans le réseau cristallin du composé de bore. Ils peuvent ainsi être inclus dans les espaces vides situés au centre des rhomboèdres.

Selon un second mode de réalisation de la matrice de l'invention, celle-ci est sous forme de matériau composite dans lequel le(s) élément(s) radioactif(s) à vie longue sont dispersés sous forme d'oxyde, forme précurseur standard, dans le composé de bore de structure rhomboédrique.

Dans ce cas, le composé de bore peut être par exemple B₄C, B₃Si ou B₆O.

Dans ce second mode de réalisation, le composé de bore utilisé correspond à du carbure de bore dans lequel on a remplacé le carbone par d'autres éléments.

Ce remplacement permet d'obtenir la résistance à la corrosion souhaitée en présence d'un milieu aqueux. En effet, le carbure de bore présente cette corrosion accélérée en raison de la formation sur sa surface d'une couche d'anhydride borique soluble en milieu aqueux et en présence de rayonnement. En remplaçant le carbone par de l'oxygène ou du silicium, on évite la production de cet anhydride borique.

En effet, dans le cas de B₃Si il se forme un film de SiO₂ passivant et, dans le cas de B₆O, il ne peut y avoir d'oxydation complémentaire en B₂O₃.

Ces matrices de l'invention présentent de plus une grande réfractarité car elles ont des points de fusion très élevés, d'au moins 1800°C, une bonne stabilité sous irradiation, une bonne inertie en milieu aqueux et la possibilité d'incorporer dans cette structure un large spectre d'éléments.

On a aussi constaté que dans le cas du composé de bore B₃Si, ce dernier se dégrade moins sous irradiation par des ions hélium que le composé B₄C.

Selon l'invention, on peut adapter la composition du composé de bore à l'utilisation souhaitée de la matrice de confinement. Ainsi, quand la matrice de confinement est destinée à l'incinération d'au moins un élément radioactif, il est intéressant d'utiliser un composé de bore, dans lequel le bore est enrichi en ¹¹B pour profiter des propriétés de modérateur de neutrons de ¹¹B.

Les matrices de confinement de l'invention peuvent être préparées par des procédés faisant appel aux techniques de la métallurgie des poudres.

Aussi, l'invention a également pour objet un procédé de préparation d'une matrice de confinement d'élément(s) radioactif(s) à vie longue comprenant au moins un composé de bore cristallin de structure rhomboédrique dans le réseau cristallin duquel sont insérés le(s) élément(s) radioactif(s) à vie longue, qui consiste à mélanger une poudre dudit (desdits) élément(s) radioactif(s) ou de composé(s) de ce(s) élément(s) à une poudre de bore ou d'un précurseur de bore, puis à faire réagir à chaud le mélange de poudres à une température de 800 à 1500°C, et à fritter les poudres obtenues.

Dans ce procédé, les opérations de réaction à chaud du mélange de poudres et de frittage des poudres obtenues peuvent être effectuées simultanément par frittage réactif du mélange de poudre à une température de 1000 à 1800°C sous une pression de 30 à 200 MPa.

Dans ce procédé, le mélange de poudres peut comprendre de plus un ou plusieurs additifs choisis parmi les métaux, les catalyseurs, les oxydes métalliques et tout adjuvant nécessaire pour former la matrice ou améliorer ses propriétés.

Les métaux peuvent être en particulier Mg, Ca, Zn. Ils servent soit de catalyseurs (par exemple magnésiothermie ou calciothermie), soit d'apport d'oxygène (par exemple ZnO).

Lorsque le mélange de poudre comprend un catalyseur celui-ci peut être utilisé pour favoriser la formation du composé de bore de structure rhomboédrique souhaité.

Les oxydes métalliques utilisés sont généralement ajoutés également pour favoriser la formation du composé de bore souhaité. A titre d'exemple d'oxydes, on peut citer l'oxyde de zinc et l'oxyde de magnésium.

Le précurseur de bore peut être choisi parmi les oxydes de bore tels que B₂0₃, l'anhydride borique H₃BO₃, les composés de bore et de silicium tels que B₃Si, les composés d'oxygène et de bore tels que B₆O et le carbure de bore B₄C.

Dans ce procédé, l'élément radioactif peut être sous forme de composé tel qu'un oxyde.

Avec ce procédé, on peut préparer un composé de bore du type B₃Si incluant dans son réseau cristallin au moins un élément radioactif, en utilisant comme mélange de poudres un mélange de poudres de bore, de silicium et d'au moins un élément radioactif. Dans ce cas, on peut réaliser simultanément la réaction à chaud et le frittage en effectuant un frittage réactif à une température de 1300 à 1400°C, sous une pression de 30 à 200 MPa.

Dans le cas où le composé de bore réalisé est du type B₆O, incorporant dans son réseau le ou les éléments radioactifs, on peut partir d'un mélange de poudres constitué de poudre de bore, d'un oxyde métallique tel que ZnO, et d'au moins un élément radioactif. Dans ce cas, on fait réagir tout d'abord les poudres à une température de 1000 à 1500°C sous flux de gaz inerte, puis on réalise le frittage à une température de 1200 à 1800°C sous une pression de 30 à 200 MPa.

Selon l'invention, on peut aussi préparer une matrice de confinement sous forme de matériau composite, comprenant un composé de bore cristallin de structure rhomboédrique dans lequel est dispersé l'élément radioactif à vie longue par un procédé comprenant :
- le mélange d'une poudre du composé de bore cristallin de structure rhomboédrique avec une poudre de l'élément radioactif ou d'un composé de cet élément choisi parmi les oxydes, et
- le frittage sous pression du mélange obtenu à une température de 1000 à 1800°C, sous une pression de 30 à 200 MPa.

Dans ce dernier cas, le composé de bore peut être avantageusement B₃Si, B₆O ou B₄C.

Dans la matrice de confinement de l'invention, le ou les éléments radioactifs inclus peuvent représenter de 5 à 20% en masse du matériau.

D'autres caractéristiques et avantages de l'invention apparaîtront mieux à la lecture de l'exemple suivant, donné bien entendu à titre illustratif et non limitatif.

### Exposé détaillé d'un mode de réalisation

L'exemple qui suit illustre la préparation d'une matrice de confinement sous forme de matériau composite à base de B₄C.

Dans cet exemple, on utilise CeO₂ pour simuler PuO₂ dans la perspective de matrices d'incinération.

On mélange 12 g de poudre de B₄C avec 1,2 g de poudre de CeO₂, les deux poudres ayant une granulométrie inférieure à 50 µm. On soumet ensuite le mélange homogène de poudres à un frittage sous charge uniaxiale à une température de 1800°C sous une pression de 30 MPa.

On obtient ainsi un matériau composite dans lequel 8% en masse de cérium sont dispersés dans du B₄C.

### Référence citée

[1] : WO95/02886.

## Revendications

1. Matrice de confinement pour le stockage ou l'incinération d'au moins un élément radioactif à vie longue, comprenant au moins un composé de bore cristallin de structure rhomboédrique incluant le(s) élément(s) radioactif(s) à vie longue.

2. Matrice selon la revendication 1, dans laquelle le(s) élément(s) radioactif(s) à vie longue sont insérés dans le réseau cristallin du composé de bore.

3. Matrice selon la revendication 1, sous forme de matériau composite dans lequel le(s) élément(s) radioactif(s) à vie longue sont dispersés sous forme d'oxyde dans le composé de bore de structure rhomboédrique.

4. Matrice selon la revendication 3, dans laquelle le composé de bore est B₃Si.

5. Matrice selon la revendication 3, dans laquelle le composé de bore est B₆O.

6. Matrice selon la revendication 3, dans laquelle le composé de bore est B₄C.

7. Matrice de confinement selon l'une quelconque des revendications 1 à 6 pour l'incinération d'au moins un élément radioactif dans laquelle le bore du composé de bore est enrichi en ¹¹B.

8. Procédé de préparation d'une matrice de confinement d'élément(s) radioactif(s) à vie longue comprenant au moins un composé de bore cristallin de structure rhomboédrique dans le réseau cristallin duquel sont insérés le(s) élément(s) radioactif(s) à vie longue, qui consiste à mélanger une poudre dudit (desdits) élément(s) radioactif(s) ou de composé(s) de ce(s) élément(s) à une poudre de bore ou d'un précurseur de bore, puis à faire réagir à chaud le mélange de poudres à une température de 800 à 1500°C, et à fritter les poudres obtenues.

9. Procédé selon la revendication 8, dans lequel la réaction à chaud et le frittage du mélange de poudres sont effectués simultanément par frittage réactif à une température de 1000 à 1800°C sous une pression de 30 à 200 MPa.

10. Procédé selon l'une quelconque des revendications 8 et 9, dans lequel le mélange de poudres comprend de plus un ou plusieurs additifs choisis parmi les métaux, les catalyseurs et les oxydes métalliques et les adjuvants nécessaires pour former la matrice ou améliorer ses propriétés.

11. Procédé selon l'une quelconque des revendications 8 à 10, dans lequel le précurseur de bore est choisi parmi B₂O₃, H₃BO₃, B₃Si, B₆O et B₄C.

12. Procédé selon la revendication 9, dans lequel les poudres du mélange sont des poudres de bore, de silicium et d'au moins un élément radioactif, et dans lequel on réalise le frittage réactif à une température de 1300 à 1400°C, sous une pression de 30 à 200 MPa.

13. Procédé selon la revendication 8, dans lequel les poudres du mélange sont des poudres de bore, d'un oxyde métallique et d'au moins un élément radioactif et dans lequel on fait réagir tout d'abord les poudres à une température de 1000 à 1500°C, sous flux de gaz inerte, puis on réalise le frittage à une température de 1200 à 1800°C, sous une pression de 30 à 200 MPa.

14. Procédé de préparation d'une matrice de confinement sous forme de matériau composite comprenant un composé de bore cristallin de structure rhomboédrique dans lequel est dispersé l'élément radioactif à vie longue, qui comprend :
- le mélange d'une poudre du composé de bore cristallin de structure rhomboédrique avec une poudre de l'élément radioactif ou d'un composé de cet élément choisi parmi les oxydes, et
- le frittage sous pression du mélange obtenu à une température de 1000 à 1800°C, sous une pression de 30 à 200 MPa.

15. Procédé selon la revendication 14, dans lequel le composé de bore est B₄C, B₆0 ou B₃Si.

## Patentansprüche

1. Begrenzungsmatrix zur Lagerung oder Verbrennung wenigstens eines langlebigen radioaktiven Elements, das wenigstens eine kristalline Borverbindung von rhomboedrischer Struktur umfasst, welche das (die) langlebige(n) radioaktive(n) Element(e) einschließt.

2. Matrix nach Anspruch 1, bei welcher das (die) langlebige(n) radioaktive(n) Element(e) in das Kristallgitter der Borverbindung eingebaut ist (sind).

3. Matrix nach Anspruch 1, in Form von Verbundmaterial, in dem das (die) langlebige(n) radioaktive(n) Element(e) in Oxidform in der Borverbindung von rhomboedrischer Struktur dispergiert ist (sind).

4. Matrix nach Anspruch 3, bei der die Borverbindung B₃Si ist.

5. Matrix nach Anspruch 3, bei der die Borverbindung B₆O ist.

6. Matrix nach Anspruch 3, bei der die Borverbindung B₄C ist.

7. Begrenzungsmatrix nach einem der Ansprüche 1 bis 6 zur Verbrennung wenigstens eines radioaktiven Elements, bei dem das Bor der Borverbindung mit ¹¹B angereichert ist.

8. Verfahren zur Herstellung einer Begrenzungsmatrix eines langlebigen radioaktiven Elements bzw. langlebiger radioaktiver Elemente, wenigstens eine kristalline Borverbindung von rhomboedrischer Struktur umfassend, in deren Kristallgitter das (die) langlebige(n) radioaktive(n) Element(e) eingebaut ist (sind), darin bestehend, ein Pulver des das langlebige radioaktive Element bzw. langlebige radioaktive Elemente mit einem Pulver aus Bor oder einem Bor-Vorläufer zu mischen, dann die Pulvermischung heiß bei einer Temperatur von 800 bis 1500 °C reagieren zu lassen und die erhaltenen Pulver zu sintern.

9. Verfahren nach Anspruch 8, bei dem die heiße Reaktion und die Sinterung der Pulvermischung simultan durchgeführt werden, durch reaktive Sinterung bei einer Temperatur von 1000 bis 1800 °C unter einem Druck von 30 bis 200 MPa.

10. Verfahren nach einem der Ansprüche 8 und 9, bei dem die Pulvermischung zudem ein oder mehrere Additive umfasst, ausgewählt unter Metallen, Katalysatoren und Metalloxiden und den Hilfsstoffen, die zur Bildung der Matrix oder zur Verbesserung ihrer Eigenschaften notwendig sind.

11. Verfahren nach einem der Ansprüche 8 bis 10, bei dem der Bor-Vorläufer ausgewählt wird unter B₂O₃, H₃BO₃, B₃Si, B₆O und B₄C.

12. Verfahren nach Anspruch 9, bei dem die Pulver der Mischung Pulver aus Bor, Silicium und wenigstens einem radioaktiven Element sind, und bei dem man die reaktive Sinterung bei einer Temperatur von 1300 bis 1400 °C durchführt, unter einem Druck von 30 bis 200 MPa.

13. Verfahren nach Anspruch 8, bei dem die Pulver der Mischung Pulver aus Bor, einem Metalloxid und wenigstens einem radioaktiven Element sind, und bei dem man die Pulver zuerst bei einer Temperatur von 1000 bis 1500 °C reagieren lässt, unter einem Edelgasstrom, und dann die Sinterung bei einer Temperatur von 1200 bis 1800 °C durchführt, unter einem Druck von 30 bis 200 MPa.

14. Verfahren zur Herstellung einer Begrenzungsmatrix in Form eines Verbundmaterials mit einer kristallinen Borverbindung von rhomboedrischer Struktur, in der das langlebige radioaktive Element dispergiert ist, das umfasst:
- das Mischen eines Pulvers der rhomboedrisch strukturierten kristallinen Borverbindung mit einem Pulver des radioaktiven Elements oder einer Verbindung dieses Elements, ausgewählt unter den Oxiden, und
- die Druck-Sinterung der erhaltenen Mischung bei einer Temperatur von 1000 bis 1800 °C, unter einem Druck von 30 bis 200 MPa.

15. Verfahren nach Anspruch 14, bei dem die Borverbindung B₄C, B₆O, oder B₃Si ist.

## Claims

1. Confinement matrix for the storage or incineration of at least one long-life radioactive element, comprising at least one crystalline boron compound of a rhombohedral structure including the long-life radioactive element(s).

2. Matrix according to claim 1, wherein the long-life radioactive element(s) is/are inserted in the crystalline network of the boron compound.

3. Matrix according to claim 1, wherein the long-life radioactive element(s) is/are dispersed in oxide form in the rhombohedral structured boron compound.

4. Matrix according to claim 3, wherein the boron compound is B₃Si.

5. Matrix according to claim 3, wherein the boron compound is B₆O.

6. Matrix according to claim 3, wherein the boron compound is B₄C.

7. Confinement matrix according to any of claims 1 to 6 for the incineration of at least one radioactive element, wherein the boron of the boron compound is enriched with ¹¹B.

8. Method to prepare a long-life radioactive element confinement matrix comprising at least one crystalline compound of a rhombohedral structure in the crystalline network of which the long-life radioactive element(s) is/are inserted, which consists of mixing a powder of said radioactive element(s) or compound(s) of said element(s) with a boron powder or a boron precursor, and then producing a hot reaction of the powder mixture at a temperature of 800 to 1500°C and sintering the powders obtained.

9. Method according to claim 8, wherein the hot reaction and sintering are performed at the same time by means of reactive sintering at a temperature of 1000 to 1800°C, at a pressure of 30 to 200 MPa.

10. Method according to any of claims 8 and 9, wherein the powder mixture also comprises one or more additives chosen from metals, catalysts, metal oxides or the adjuvants required to form the matrix or improve its properties.

11. Method according to any of claims 8 to 10, wherein the boron precursor is chosen from B₂O₃, H₃BO₃, B₃Si, B₆O and B₄C.

12. Method according to claim 9, wherein he powders of the mixture are powders of boron, a metal oxide and at least one radioactive element, wherein the reactive sintering is performed at a temperature of 1300 to 1400°C at a pressure of 30 to 200 MPa.

13. Method according to claim 8, wherein the powders of the mixture are powders of boron, a metal oxide and at least one radioactive element, wherein the powders are first reacted at a temperature of 1000 to 1500°C, under an inert gas stream, and the sintering is then carried out at a temperature of 1200 to 1800°C at a pressure of 30 to 200 MPa.

14. Method to prepare a confinement matrix in the form of a composite material, comprising a crystalline boron compound of a rhombohedral structure wherein the long-life radioactive element is dispersed using a method comprising:
- mixing of a powder of the rhombohedral structure crystalline boron compound with a powder of the radioactive element or a compound of said element chosen from oxides, and
- pressurised sintering of the mixture obtained at a temperature of 1000 to 1800°C, at a pressure of 30 to 200 MPa.

15. Method according to claim 14, wherein the boron compound is B₄C, B₆O or B₃Si.
